# FASCICULE DE BREVET EUROPEEN

(11) **EP 3 402 657 B1**
(45) Date de publication et mention de la délivrance du brevet: **01.11.2023**
(21) Numéro de dépôt: 17712183.7
(22) Date de dépôt: 09.01.2017
(51) Int. Cl.: B29C 70/32, B29C 70/54, B29C 53/56, F01D 25/24, F01D 21/04, F02C 7/04

(54) **DISPOSITIF DE GUIDAGE D'UNE TEXTURE FIBREUSE SUR UN MANDRIN D'IMPRÉGNATION, ET MANDRIN D'IMPRÉGNATION ET MACHINE D'ENROULEMENT ASSOCIÉS**
VORRICHTUNG ZUM FÜHREN EINER FASERIGEN STRUKTUR AUF EINEN IMPRÄGNIERDORN UND ZUGEHÖRIGER IMPRÄGNIERDORN UND WICKELMASCHINE
DEVICE FOR GUIDING A FIBROUS STRUCTURE ONTO AN IMPREGNATION MANDREL, AND ASSOCIATED IMPREGNATION MANDREL AND WINDING MACHINE

(30) Priorité: 15.01.2016 FR 1650319
(43) Date de publication de la demande: 21.11.2018
(73) Titulaire: Safran Aircraft Engines, 75015 Paris (FR)
(72) Inventeur: CAMUS, Erwan, 77550 Moissy-Cramayel (FR); MATHON, Richard, 77550 Moissy-Cramayel (FR)
(74) Mandataire: Cabinet Beau de Loménie
(86) Numéro de dépôt international: PCT/FR2017/050044
(87) Numéro de publication internationale: WO 2017/121949

(56) Documents cités:
- FR-A1- 2 981 881
- US-A1- 2013 087 955

## Description

### Arrière-plan de l'invention

La présente invention se rapporte au domaine général de la réalisation de carters de turbine à gaz en matériau composite, et plus particulièrement des carters de rétention pour soufflante de turbine à gaz pour moteurs aéronautiques.

Dans un moteur aéronautique à turbine à gaz, un carter de soufflante remplit plusieurs fonctions. Il définit la veine d'entrée d'air dans le moteur, supporte un matériau abradable en regard du sommet des aubes de la soufflante, supporte une structure éventuelle d'absorption d'ondes sonores pour le traitement acoustique en entrée du moteur et incorpore ou supporte un éventuel bouclier de rétention. Ce dernier constitue un piège retenant les débris, tels que des objets ingérés ou des fragments d'aubes endommagées, projetés par la centrifugation, afin d'éviter qu'ils traversent le carter et atteignent d'autres parties de l'aéronef.

La réalisation d'un carter de rétention de soufflante en matériau composite a déjà été proposée. On pourra par exemple se référer au document EP 1,961,923 qui décrit la fabrication d'un carter en matériau composite à épaisseur évolutive comprenant la formation d'un renfort fibreux par des couches superposées d'une texture fibreuse et la densification du renfort fibreux par une matrice. Selon cette invention, la texture fibreuse est réalisée par tissage tridimensionnel avec épaisseur évolutive et est enroulée en plusieurs couches superposées sur une paroi annulaire centrale d'un mandrin d'imprégnation dont le profil correspond à celui du carter à fabriquer. La préforme fibreuse ainsi obtenue est maintenue sur le mandrin d'imprégnation et une imprégnation par résine est réalisée avant polymérisation. L'enroulement sur un mandrin d'une texture tissée d'épaisseur évolutive comme décrit dans ce document permet de disposer directement d'une préforme tubulaire ayant le profil désiré avec épaisseur variable.

En pratique, la mise en oeuvre de ce procédé pose le problème du maintien de la préforme fibreuse lors de son enroulement sur le mandrin d'imprégnation, et plus particulièrement le maintien en position verticale des portions latérales de la texture fibreuse destinées à former les futures brides du carter.

L'enroulement est réalisé sous tension afin de limiter le foisonnement de la préforme tissée dans la partie centrale. Cette tension vient plaquer la couche de texture fibreuse en cours d'enroulement sur les couches de texture fibreuse déjà enroulées sur le mandrin d'imprégnation. Lors de l'enroulement, les brides, c'est-à-dire les portions latérales de la texture fibreuse, passent d'une position horizontale, sur le mandrin d'appel, à une position verticale sur le mandrin d'imprégnation en reposant directement ou indirectement contre les flasques latéraux du mandrin d'imprégnation.

Lors de la transition de la position horizontale à la position verticale des brides, celles-ci ont tendance à retomber vers l'intérieur sur la texture fibreuse enroulée sur la paroi annulaire centrale du mandrin d'imprégnation. Lorsqu'une bride vient à retomber, lors de la prise d'un nouveau tour, la bride ainsi rabattue peut se retrouver sous le nouveau tour de texture fibreuse au niveau de la partie de la veine, c'est-à-dire au niveau de l'empilement sur la paroi annulaire centrale, et non dans la partie de la bride. La préforme enroulée sur le mandrin d'imprégnation présente alors un défaut dû à une surépaisseur locale, et une perte d'épaisseur au niveau de la future bride.

La seule solution existante consiste à surveiller visuellement le positionnement de la bride au cours de l'enroulement et à maintenir manuellement la texture fibreuse en amont de la zone de recouvrement des brides.

Une erreur d'inattention ou une mauvaise formation de l'opérateur réalisant l'enroulement peut conduire à une pièce défectueuse.

Le document FR 2 981 881 concerne un dispositif de maintien d'une texture fibreuse sur un mandrin d'imprégnation d'une machine d'enroulement, comprenant une traverse formant support dont chaque extrémité est destinée à être fixée sur l'un des flasques latéraux du mandrin, un porte-patin central monté sur la traverse et muni d'un patin destiné à venir en appui contre une couche de texture fibreuse enroulée sur le mandrin, deux porte-patins latéraux montés sur la traverse et muni chacun d'un patin principal destiné à venir en appui contre la couche de texture fibreuse enroulée sur le mandrin et d'un patin latéral destiné à venir en appui contre un bord latéral de la couche de texture fibreuse enroulée sur le mandrin, et des moyens pour exercer un effort de serrage des patins sur la couche de texture fibreuse enroulée sur le mandrin.

### Objet et résumé de l'invention

L'invention vise à pallier de tels inconvénients en proposant un guidage de la bride enroulée qui permette de maîtriser la position des brides de la texture fibreuse contre les flasques d'un mandrin d'imprégnation juste avant la prise d'un tour supplémentaire.

Ce but est atteint grâce à un dispositif de guidage d'une texture fibreuse sur un mandrin d'imprégnation d'une machine d'enroulement, selon la revendication 1, comprenant une première cale radiale destinée à être disposée en regard d'un premier flasque du mandrin d'imprégnation, une seconde cale radiale destinée à être disposée en regard d'un second flasque du mandrin d'imprégnation, et un châssis apte à supporter la première cale et la seconde cale, le châssis comprenant des moyens d'ajustement de la position de la première cale et de la seconde cale aptes à positionner la première cale et la seconde cale respectivement à distance du premier flasque et du second flasque du mandrin d'imprégnation de manière à maintenir respectivement une première portion de texture fibreuse s'étendant le long du premier flasque en appui contre le premier flasque et une seconde portion de texture fibreuse s'étendant le long du second flasque en appui contre le second flasque, sans bloquer la rotation du mandrin d'imprégnation entre deux tours consécutifs de la texture fibreuse.

Entre deux tours consécutifs de la texture fibreuse, les cales du dispositif de guidage se positionnent de manière à éviter que les portions latérales de la texture fibreuse de la partie déjà enroulée sur le mandrin d'imprégnation ne s'affaissent et ne passent sous la partie de la texture fibreuse arrivant au contact du mandrin d'imprégnation pour être enroulée.

Autrement dit, en plaçant les cales parallèlement aux plans des flasques entre la texture fibreuse déjà enroulée et la texture fibreuse destinée à former la couche suivante, on empêche la couche suivante de venir s'empiler sur une bride repliée sur elle-même. Les cales du dispositif de guidage permettent ainsi le maintien vertical de la bride déjà en place et le bon recouvrement de celle-ci par la couche suivante. Le dispositif de guidage permet ainsi de garantir le bon recouvrement d'une bride à l'autre sans intervention humaine. On entend ici par bride une portion latérale ou un empilement de portions latérales de texture fibreuse déjà enroulée(s) s'étendant contre un flasque.

Selon un premier aspect du dispositif de guidage, les moyens d'ajustement peuvent comporter pour chacune des deux cales un premier module apte à ajuster la position de la cale dans une première direction en fonction de l'épaisseur de la texture fibreuse et du nombre de tours que le mandrin a déjà effectué avec la texture fibreuse.

Le premier module des moyens d'ajustement permet d'ajuster l'espacement entre la première cale et la seconde cale et d'éloigner chacune des deux cales du flasque avec lequel elle coopère pour maintenir la bride dans le plan radial en appui contre le flasque à chaque nouveau tour du mandrin d'imprégnation. A chaque nouveau tour de mandrin d'imprégnation, la superposition de couches de texture fibreuse augmente d'une couche supplémentaire. Par conséquent, pour s'assurer de ne pas bloquer la rotation du mandrin d'imprégnation et maintenir un guidage de la texture fibreuse, la première cale et la seconde cale doivent être déplacées chacune orthogonalement au plan dans lequel s'étend le flasque correspondant, dans un sens opposé au flasque. Autrement dit, la première et la deuxième cales sont rapprochées l'une de l'autre après la prise d'un tour.

Selon un deuxième aspect du dispositif de guidage, les moyens d'ajustement peuvent comporter pour chacune des deux cales un second module apte à ajuster la position de la cale dans une seconde direction distincte de la première direction en fonction de la forme et du diamètre du mandrin d'imprégnation, d'une part, et en fonction de l'épaisseur de la texture fibreuse et du nombre de tours que le mandrin a déjà effectué avec la texture fibreuse, d'autre part.

Le second module des moyens d'ajustement permet d'ajuster, pour chacune des première et seconde cales, la distance séparant la cale de la paroi annulaire centrale du mandrin d'imprégnation. Le second module permet ainsi avant le début de l'enroulement de positionner radialement la première cale en fonction du diamètre de la paroi annulaire centrale de la section située dans le plan dans lequel s'étend la première cale parallèlement et à proximité du premier flasque. De la même manière, le second module permet de positionner radialement avant le début de l'enroulement la seconde cale en fonction du diamètre de la paroi annulaire centrale de la section située dans le plan dans lequel s'étend la seconde cale parallèlement et à proximité du second flasque.

La première cale et la seconde cale peuvent ainsi être positionnées selon la deuxième direction dans une position différente en fonction de la forme du mandrin d'imprégnation.

Au cours de l'enroulement de la texture fibreuse sur le mandrin d'imprégnation, le second module permet en outre de déplacer selon la seconde direction chacune des première et seconde cales. La première et la seconde cales peuvent ainsi être éloignées de la paroi annulaire centrale du mandrin d'imprégnation à chaque nouveau tour de mandrin d'imprégnation de manière à prendre en compte l'augmentation de la superposition de couches de texture fibreuse à chaque tour. Cela permet d'éviter un risque de blocage de la rotation du mandrin d'imprégnation.

Les première et seconde cales étant déplacées également dans la première direction parallèle à l'axe de rotation du mandrin et orthogonale à la seconde direction, il est possible que le diamètre du mandrin d'imprégnation change avec le déplacement des cales selon la première direction. Par conséquent, malgré l'augmentation de l'épaisseur de la superposition des couches de texture fibreuse, il est possible que, pour un nouveau tour de mandrin d'imprégnation, la première et/ou la seconde cale(s) ne soit pas déplacée(s) dans la seconde direction, par exemple dans un cas où l'augmentation de l'épaisseur de la superposition de couches de texture fibreuse est compensée par une diminution du diamètre de la paroi annulaire centrale du mandrin, ou même soit déplacée(s) vers la paroi annulaire centrale, par exemple dans un cas où la diminution du diamètre de la paroi annulaire centrale du mandrin est plus importante que l'augmentation de l'épaisseur de la superposition de couches de texture fibreuse relative au nouveau tour de mandrin d'imprégnation.

Selon un troisième aspect du dispositif de guidage, le dispositif de guidage peut comprendre une unité électronique de commande apte à commander l'actionnement automatique des moyens d'ajustement en fonction de l'enroulement de la texture fibreuse sur le mandrin d'imprégnation.

L'unité électronique de commande peut être couplée à un ou plusieurs capteurs montés sur le dispositif de guidage aptes à détecter la position dans la première direction et la seconde direction de la texture fibreuse enroulée sur le mandrin d'imprégnation, l'unité électronique de commande contrôlant ainsi le déplacement des deux cales du dispositif de guidage dans la première et la seconde directions.

L'unité électronique de commande peut aussi être couplée à une unité de pilotage du mandrin d'imprégnation et contrôlée le déplacement et le positionnement initial des deux cales du dispositif de guidage dans la première et la seconde directions uniquement en fonction des informations fournies par l'unité de pilotage du mandrin d'imprégnation ou à partir des informations délivrées par les capteurs du dispositif de guidage et des informations délivrées par l'unité de pilotage du mandrin d'imprégnation.

Selon un quatrième aspect du dispositif de guidage, au moins l'une des première et seconde cales peut être en matériau plastique comme du Téflon^{®}.

La réalisation d'au moins une des cales en matériau plastique permet de limiter le frottement et la pollution de la préforme formée par enroulement de la texture fibreuse sur le mandrin d'imprégnation.

Selon un cinquième aspect du dispositif de guidage, pour chacune des première et seconde cales, ladite cale est associée à une cale radiale supplémentaire disposée parallèlement à ladite cale de manière à définir entre la cale et la cale supplémentaire au moins une portion de rail annulaire de guidage, ledit rail de guidage étant destiné à recevoir une portion de texture fibreuse en cours d'enroulement destinée à venir s'étendre le long d'un flasque correspondant pendant que la face de ladite cale opposée à ladite cale supplémentaire maintien au moins une couche de portion de texture fibreuse déjà enroulée s'étendant le long dudit flasque en appui contre le flasque.

La cale supplémentaire permet ainsi de former un rail de guidage pour les portions latérales de la texture fibreuse sur le point d'être enroulées. Cela permet d'initier l'orientation orthogonale des portions latérales par rapport à la portion de la texture fibreuse s'étendant entre les portions latérales avant que cette partie de la texture fibreuse ne soit enroulée sur le mandrin d'imprégnation ne soit initié.

Cette orientation précédant l'enroulement permet ainsi d'éviter le risque de frottement de la portion latérale contre la bride formée par la texture fibreuse déjà enroulée, tout en empêchant, grâce à la cale supplémentaire, que la portion latérale ainsi pré-orientée ne tombe et ne se rabatte sur la portion de texture fibreuse s'étendant entre les deux portions latérales.

Selon un sixième aspect du dispositif de guidage, le dispositif de guidage peut comprendre deux spirales de guidage aptes chacune à faire un tour complet de la paroi annulaire centrale du mandrin d'imprégnation s'étendant entre le premier et le second flasques, chaque spirale de guidage comportant une première extrémité formant ladite cale et une seconde extrémité opposée à la première extrémité formant ladite cale supplémentaire.

Ce mode de réalisation permet de fournir un guide annulaire tout le long du parcours de la texture fibreuse autour du mandrin d'imprégnation tout en minimisant le nombre de pièces.

L'invention a également pour objet un mandrin d'imprégnation d'une machine d'enroulement destiné à recevoir un renfort fibreux formé par des couches superposées d'une texture fibreuse pour la fabrication d'un carter de turbine à gaz en matériau composite, ledit mandrin d'imprégnation comportant une paroi annulaire centrale dont le profil correspond à celui du carter à fabriquer, et un premier flasque et un second flasque latéraux dont les profils correspondent à ceux de brides externes du carter à fabriquer.

Selon une caractéristique générale du mandrin d'imprégnation, celui-ci peut comprendre un dispositif de guidage tel que défini ci-dessus, la première cale radiale étant disposée en regard du premier flasque et la seconde cale radiale étant disposée en regard du second flasque, la première cale et la seconde cale étant distantes respectivement du premier flasque et du second flasque pour maintenir respectivement une première portion et une seconde portion de texture fibreuse s'étendant respectivement le long du premier flasque et du second flasque en appui contre le premier flasque et le second flasque sans bloquer la rotation du mandrin.

Le dispositif de guidage peut être intégré au mandrin d'imprégnation.

Selon un autre aspect du mandrin d'imprégnation, celui-ci peut comprendre une unité électronique de sécurité apte à déclencher un arrêt du mandrin d'imprégnation dès que l'effort exercé par la première portion et/ou la seconde portion de texture fibreuse s'étendant respectivement le long du premier flasque et du second flasque respectivement sur la première cale et la seconde cale est supérieur à un seuil de force.

Ainsi, dans le cas de brides fortement instables qui tendent à se rabattre malgré la présence des guides, l'unité électronique de sécurité permet de fournir un limiteur de couple sur les cales. Autrement dit, si l'effort exercé par la bride instable de la texture fibreuse est supérieur à une valeur de référence prédéterminée, une indication est envoyée à l'unité de pilotage de la machine d'enroulement indiquant qu'une anomalie est constatée et l'arrêt de la machine d'enroulement est commandé.

L'invention a encore pour autre objet, une machine d'enroulement d'une texture fibreuse sur un mandrin d'imprégnation, comprenant un mandrin d'appel sur lequel est destiné à être stockée une texture fibreuse obtenue par tissage tridimensionnel et un mandrin d'imprégnation tel que défini ci-dessus.

### Brève description des dessins.

L'invention sera mieux comprise à la lecture faite ci-après, à titre indicatif mais non limitatif, en référence aux dessins annexés sur lesquels :
- la figure 1 est une vue schématique et de côté d'une machine d'enroulement d'une texture fibreuse sur un mandrin d'imprégnation conforme à l'invention et apte à comprendre un dispositif de guidage (non représenté) selon l'invention ;
- les figures 2 et 3 présentent schématiquement deux vues partielles en perspective d'une machine d'enroulement selon un premier mode de réalisation de l'invention ; et
- la figure 4 présente schématiquement une vue en perspective d'un mandrin d'imprégnation selon un deuxième mode de réalisation de l'invention ;
- les figures 5 et 6 présentent respectivement une vue en perspective d'un mandrin d'imprégnation et une vue en perspective d'un dispositif de guidage selon un troisième mode de réalisation de l'invention.

### Description détaillée de modes de réalisation

L'invention sera décrite ci-après dans le cadre de son application à la fabrication d'un carter de soufflante de moteur aéronautique à turbine à gaz. De manière plus générale, l'invention s'applique à la fabrication de toute pièce annulaire de structure de turbomachine.

Un exemple de procédé de fabrication d'un tel carter de soufflante est décrit dans le document EP 1,961,923 auquel on pourra se référer.

Le carter est réalisé en matériau composite à renfort fibreux densifié par une matrice. Le renfort est en fibres par exemple de carbone, verre, aramide ou céramique et la matrice est en polymère, par exemple époxide, bismaléimide ou polyimide.

Brièvement, le procédé de fabrication décrit dans le document cité ci-dessus consiste à réaliser une texture fibreuse par tissage tridimensionnel avec appel en chaîne sur un tambour (appelé ci-après mandrin d'appel) ayant un profil déterminé en fonction du profil du carter à fabriquer.

La texture fibreuse ainsi réalisée est ensuite transférée sur le mandrin d'un moule d'injection de résine (ci-après appelé mandrin d'imprégnation) dont le profil extérieur correspond au profil interne du carter à fabriquer.

La préforme étant maintenue sur le mandrin d'imprégnation, une imprégnation est alors réalisée par une résine. A cet effet, une enveloppe est appliquée sur la préforme et la résine est injectée dans le moule ainsi constitué. L'imprégnation peut être assistée par établissement d'une différence de pression entre l'intérieur et l'extérieur du moule dans lequel se trouve la préforme. Après imprégnation, une étape de polymérisation de la résine est réalisée.

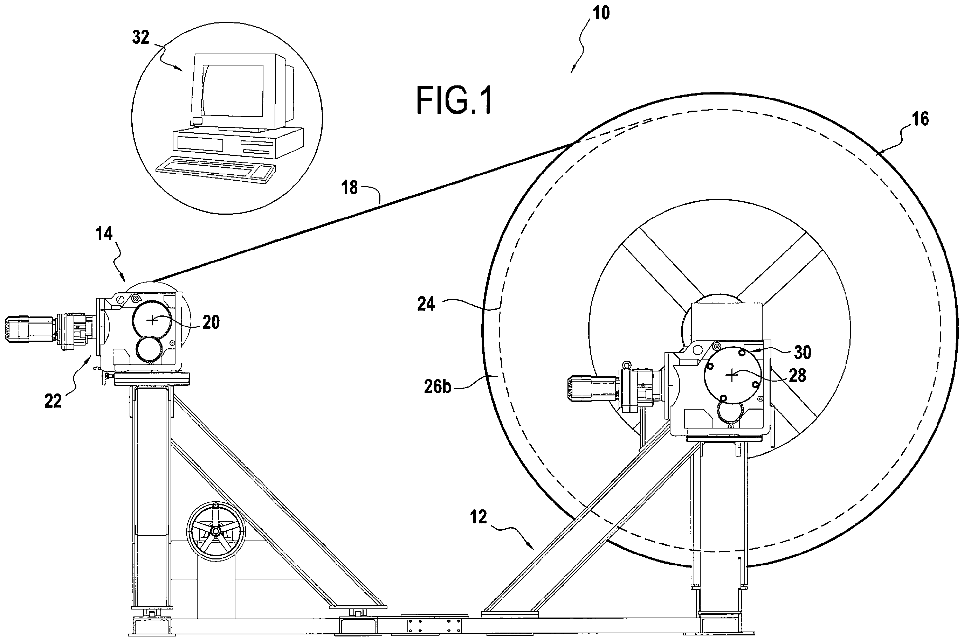

L'invention, et notamment le dispositif de guidage, s'applique à tout type de machine d'enroulement ayant pour fonction de permettre un transfert automatisé de la texture fibreuse stockée sur le mandrin d'appel vers le mandrin d'imprégnation du moule d'injection de résine, telle que celle représentée sur la figure 1.

On pourra se référer à la demande de brevet FR 2 974 026 qui décrit en détails la structure et le fonctionnement d'une telle machine.

Brièvement, la machine d'enroulement 10 comprend un bâti 12 supportant notamment un mandrin d'appel 14 et un mandrin d'imprégnation 16 conforme à l'invention. Ces mandrins 14, 16 sont amovibles, c'est-à-dire qu'ils peuvent être démontés du bâti 12.

Le mandrin d'appel 14 reçoit la texture fibreuse 18 obtenue par exemple par tissage tridimensionnel. Il est porté par un axe horizontal 20 dont une extrémité est montée de façon rotative sur le bâti 12 de la machine d'enroulement et l'autre extrémité est couplée à l'arbre de sortie d'un moteur électrique 22, par exemple un motoréducteur électrique à courant alternatif.

L'ensemble constitué du mandrin d'appel 14, de son axe 20 et de son moteur électrique 22 peuvent être montés de manière à pouvoir translater par rapport au bâti 12 le long de l'axe de rotation 20 du mandrin d'appel 14. Ce degré de liberté en translation du mandrin d'appel 14 permet de réaliser un alignement de ce mandrin 14 sur le mandrin d'imprégnation 16 préalablement à l'enroulement de la texture fibreuse 18 sur le mandrin d'imprégnation 16.

Le mandrin d'imprégnation 16 de la machine d'enroulement 10 est destiné à recevoir en couches superposées la texture fibreuse 18 stockée sur le mandrin d'appel 14. De façon connue en soi, il présente une paroi annulaire centrale 24 dont le profil de la surface extérieure correspond à celui de la surface interne du carter à réaliser et deux flasques latéraux 26a et 26b dont les profils correspondent à ceux des brides externes du carter à ses extrémités amont et aval afin de permettre son montage et sa liaison avec d'autres éléments.

Le mandrin d'imprégnation 16 est porté par un axe horizontal 28 qui est parallèle à l'axe de rotation 20 du mandrin d'appel 14 et dont une extrémité est montée de façon rotative sur le bâti 12 de la machine d'enroulement 10 et l'autre extrémité est couplée à l'arbre de sortie d'un moteur électrique 30, par exemple un motoréducteur électrique à courant alternatif.

Une unité de pilotage, par exemple une station de travail informatique 32, est reliée aux moteurs électriques 22, 30 des deux mandrins 14, 16 et permet de commander et contrôler de la vitesse de rotation de chaque mandrin 14, 16. De manière plus générale, cette unité de pilotage 32 permet de piloter l'ensemble des paramètres de fonctionnement de la machine d'enroulement 10.

Avec une telle machine 10, l'enroulement de la texture fibreuse 18 en couches superposées sur le mandrin d'imprégnation 16 s'effectue en appliquant une tension d'enroulement adéquate sur la texture fibreuse 18. A cet effet, une tension de consigne est prédéfinie en fonction notamment de la nature de la texture fibreuse 18 et est appliquée au mandrin qui offre le couple résistant à l'enroulement (généralement le mandrin d'appel 14) par l'intermédiaire de la station de travail informatique 32.

A titre d'exemple, il pourra être nécessaire de réaliser 4 tours 1/8 pour obtenir une préforme de carter ayant une épaisseur conforme aux spécifications.

Selon l'invention, le mandrin d'imprégnation 16 comprend un dispositif de guidage 100 de la texture fibreuse 18.

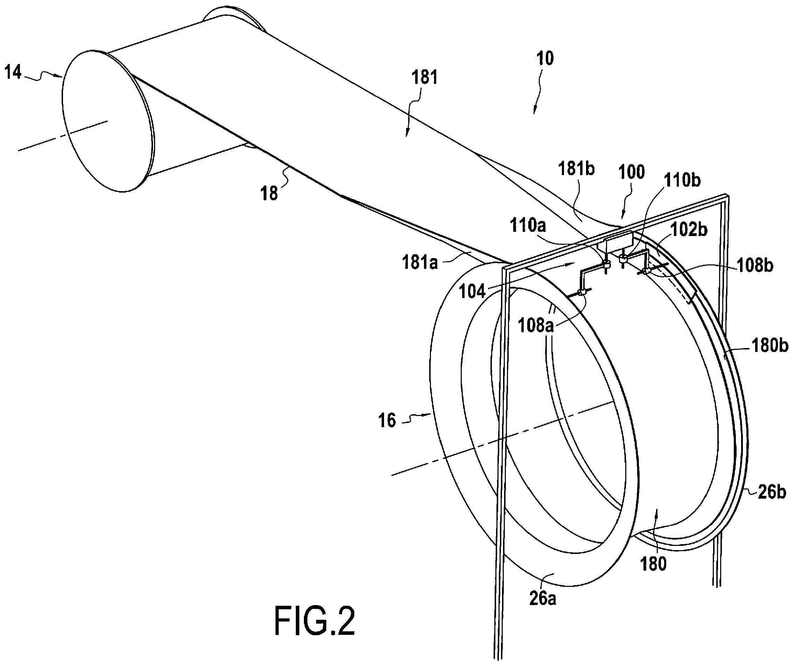

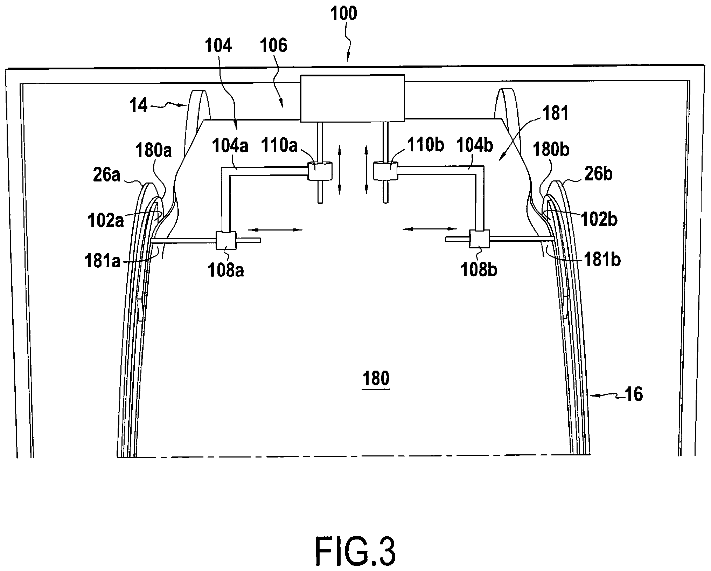

Plus précisément, comme représenté sur les figures 2 et 3, ce dispositif de guidage 100 comprend deux cales radiales 102a et 102b montées sur un châssis 104.

La première cale 102a est disposée en regard du premier flasque 26a du mandrin d'imprégnation 16 et la seconde cale 102b est disposée en regard du second flasque 26b. La première cale 102a s'étend dans un plan parallèle au premier flasque 26a et la seconde cale 102b s'étend dans un plan parallèle au second flasque 26b.

Avantageusement, les deux cales 102a et 102b sont réalisées en Téflon@ ce qui permet de limiter le frottement et la pollution de la texture fibreuse. Toutefois, les deux cales peuvent aussi être réalisées en matériau métalliques

Dans le premier mode de réalisation illustré sur les figures 2 et 3, la première et la seconde cales 102a et 102b possèdent chacune une même forme en arc de cercle ou en portion de croissant.

La forme en arc de cercle, ou partiellement annulaire, est facilement réalisable à partir d'un anneau découpé en plusieurs section.

La forme en demi croissant permet de progressivement redresser une bride, formée par une portion latérale 180a ou 180b de texture fibreuse 18 déjà enroulée, dans le cas où elle s'est déjà au moins partiellement affaissée sur la partie 180 de texture fibreuse 18 enroulée sur la paroi annulaire centrale 24.

Sur les figures 2 et 3, on a référencé 180 la partie de la texture fibreuse 18 déjà enroulée, c'est-à-dire en contact avec le mandrin d'imprégnation 16, et 181 la partie de la texture fibreuse 18 non enroulée, c'est-à-dire située entre le mandrin d'appel 14 et le mandrin d'imprégnation 16.

Les cales peuvent aussi posséder une forme rectangulaire et être positionnées de manière à s'étendre au moins partiellement le long de la partie 181 de la texture fibreuse 18 entre le mandrin d'imprégnation 16 et le mandrin d'appel 14 .

Le châssis 104 comprend des moyens 106 d'ajustement de la position de la première cale 102a et de la seconde cale 102b . Les moyens d'ajustement 106 sont couplés à la première cale 102a via une première portion de châssis 104a et à la seconde cale 102b via une seconde portion de châssis 104b.

Les moyens d'ajustement 106 sont configurés pour positionner la première cale 102a et la seconde cale 102b respectivement à distance du premier flasque 26a et du second flasque 26b du mandrin d'imprégnation 100 de manière à maintenir respectivement une première portion 180a de texture fibreuse 18 s'étendant le long du premier flasque 26a en appui contre le premier flasque 26a et une seconde portion 180b de texture fibreuse s'étendant le long du second flasque 26b en appui contre le second flasque 26b, sans bloquer la rotation du mandrin d'imprégnation 16.

Lors du montage du dispositif de guidage 100 sur le mandrin d'imprégnation 16 de la machine d'enroulement 10, la première cale 102a et la seconde cale 102b sont respectivement séparées du premier flasque 26a et du second flasque 26b d'une distance permettant d'éviter qu'entre deux tours consécutifs de la texture fibreuse 18 sur le mandrin d'imprégnation 16 les portions latérales 180a et 180b de la partie 180 de texture fibreuse 18 déjà enroulée sur le mandrin d'imprégnation 16 ne s'affaissent et ne passent sous la partie 181 de la texture fibreuse 18 arrivant au contact du mandrin d'imprégnation 16 pour être enroulée.

Les moyens d'ajustement 106 comportent pour chacune des deux cales 102a et 102b un module de déplacement horizontal respectivement noté 108a et 108b. Chaque module de déplacement horizontal 108a, 108b est configuré pour déplacer la cale 102a, 102b à laquelle il est associé dans une direction parallèle à l'axe de rotation 28 du mandrin d'imprégnation 16.

Les premiers modules 108a et 108b permettent ainsi d'ajuster la position horizontale des deux cales 102a et 102b en fonction de l'épaisseur intrinsèque de la texture fibreuse 18 et du nombre de tours que le mandrin d'imprégnation 16 a déjà effectué avec la texture fibreuse 18. Les cales 102a et 102b sont ainsi déplacées horizontalement en fonction de l'épaisseur de la bride formée par les portions latérales 180a et 180b de la partie 180 de texture fibreuse 18 déjà enroulée s'étendant le long des flasques 26a et 26b.

Les moyens d'ajustement 106 comportent également pour chacune des deux cales 102a et 102b un module de déplacement radial respectivement référencé 110a et 110b. Chaque module de déplacement radial 110a, 110b est configuré pour déplacer la cale 102a, 102b à laquelle il est associé dans une direction parallèle au plan dans lequel s'étend le flasque correspondant 26a, 26b.

Les modules de déplacement radial 110a et 110b permettent ainsi d'ajuster la position radial des deux cales 102a et 102b en fonction, d'une part, de l'épaisseur intrinsèque de la texture fibreuse 18 et du nombre de tours que le mandrin d'imprégnation 16 a déjà effectué avec la texture fibreuse 18, et, d'autre part, de la forme et du diamètre du mandrin d'imprégnation 16.

Les cales 102a et 102b sont ainsi déplacées radialement en fonction de l'épaisseur de la partie centrale de la préforme formée par la portion s'étendant entre les portions latérales 180a et 180b de la partie 180 de texture fibreuse 18 déjà enroulée. Elles sont ainsi également positionnées radialement avant le début de l'enroulement en fonction de chacun des diamètres de la paroi annulaire centrale 24 de la section située dans le plan dans lequel s'étend la cale 102a, 102b parallèlement et à proximité du flasque correspondant 26a, 26b. Et cela de manière indépendante entre les deux cales 102a, 102b.

Les cales 102a et 102b sont également déplacées radialement, grâce aux modules de déplacement radial 110a et 110b, au cours de l'enroulement de la texture fibreuse 18 sur le mandrin d'imprégnation 16. La première et la seconde cales 102a et 102b peuvent ainsi être éloignées de la paroi annulaire centrale 24 du mandrin d'imprégnation 16 à chaque nouveau tour de manière à prendre en compte une éventuelle variation du diamètre de la paroi annulaire centrale 24 le long de l'axe de rotation 28.

Le dispositif de guidage 100 comprend en outre une unité électronique de commande raccordée aux moyens d'ajustement 106 de manière à commander automatiquement l'actionnement des modules de déplacement horizontal 108a et 108b et les modules de déplacement radial 110a et 110b en fonction de l'enroulement de la texture fibreuse 18 sur le mandrin d'imprégnation 16.

L'unité électronique de commande est couplée à l'unité de pilotage 32 du mandrin d'imprégnation 16 afin de recevoir les informations relatives au nombre de tours du mandrin 16 notamment.

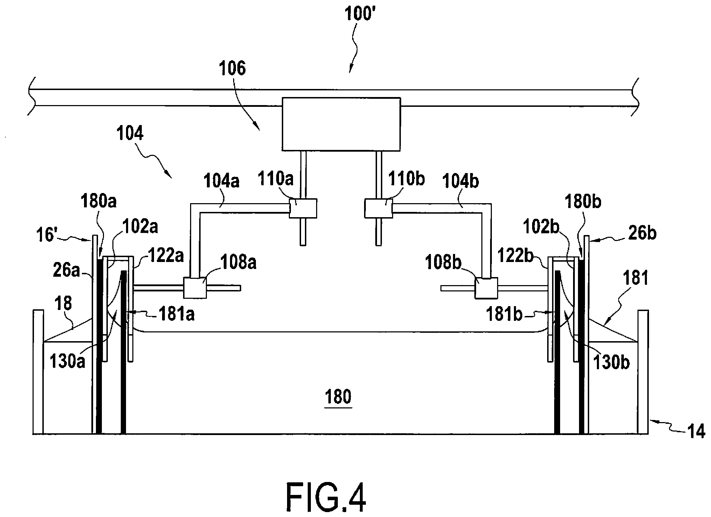

Sur la figure 4 est illustré schématiquement une vue en perspective d'un mandrin d'imprégnation 16' selon un deuxième mode de réalisation de l'invention

Ce deuxième mode de réalisation diffère du premier mode de réalisation en ce que le dispositif de guidage, référencé ici 100', comprend une première cale supplémentaire 122a associée à la première cale 102a et une seconde cale supplémentaire 122b associée à la seconde cale 102b.

Chacune des deux cales supplémentaires 122a et 122b est disposée parallèlement à la cale 102a et 102b à laquelle elle est associée de manière à définir entre la cale 102a, 102b et la cale supplémentaire 122a, 122b une portion de rail annulaire de guidage 130a, 130b.

La portion de rail de guidage 130a, 130b est disposée autour de la zone où la texture fibreuse 18 vient toucher la paroi annulaire centrale 24 du mandrin d'imprégnation 16. La portion de rail de guidage 130a, 130b est ainsi configurée et disposée pour recevoir une portion latérale 181a, 181b de texture fibreuse 18 destinée à venir s'étendre le long d'un flasque 26a, 26b correspondant pendant que la cale 102a, 102b de la portion de rail de guidage 130a, 130b maintien au moins une couche de portion latérale 180a, 180b de texture fibreuse 18 déjà enroulée s'étendant le long dudit flasque 26a, 26b en appui contre ce dernier. Cela permet d'initier l'orientation radiale, voire verticale, des portions latérales 181a, 181b de la partie 181 de la texture fibreuse 18 avant leur enroulement sur le mandrin d'imprégnation 16.

La cale 102a, 102b et la cale supplémentaire 122a, 122b d'une portion de rail de guidage 130a, 130b sont solidarisées l'une avec l'autre, par exemple par des barres de solidarisation ou bien en étant réalisées en une seule pièce selon un profil en U renversé. Cette solidarisation permet ainsi de déplacer toute la portion de rail de guidage 130a, 130b à la fois à l'aide des moyens d'ajustement 106.

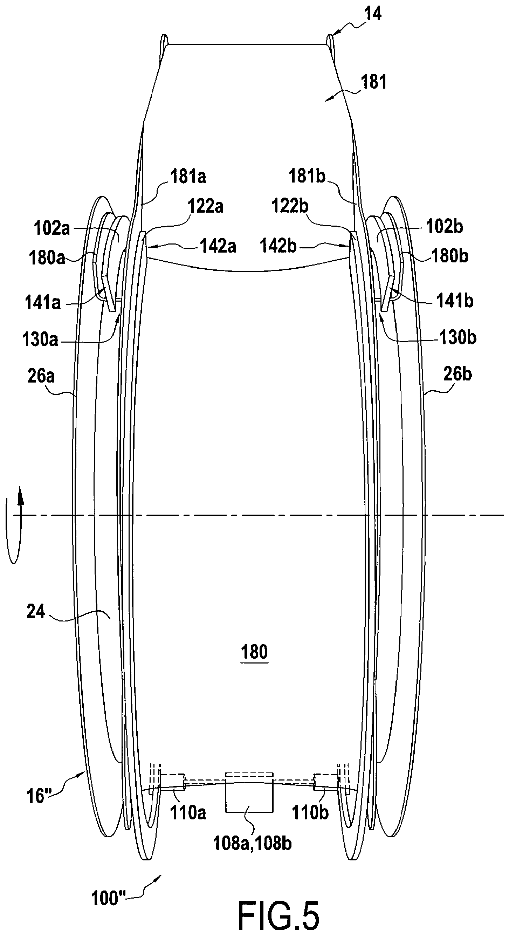

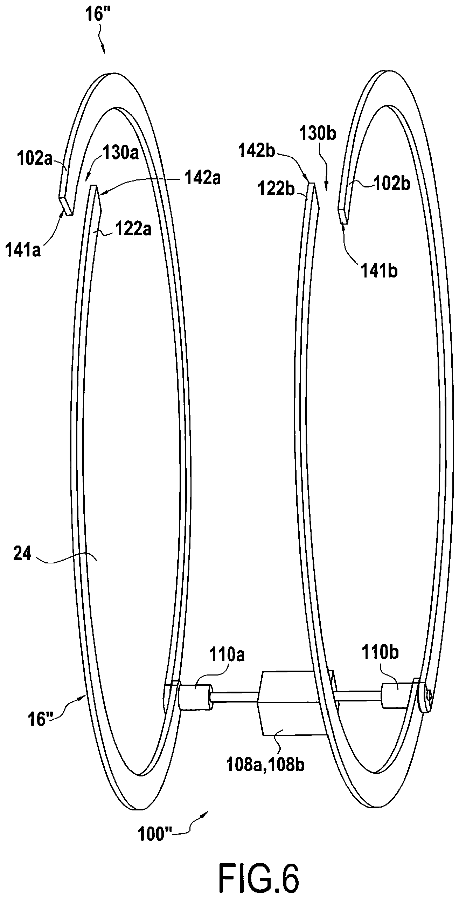

Sur les figures 5 et 6 sont illustrés schématiquement une vue en perspective d'un mandrin d'imprégnation 16" selon un troisième mode de réalisation de l'invention et une vue en perspective du dispositif de guidage 100" selon ce troisième mode de réalisation.

Ce troisième mode de réalisation diffère du deuxième mode de réalisation en ce que le dispositif de guidage, référencé ici 100", comprend deux spirales de guidage faisant chacune un tour complet de la paroi annulaire centrale 24 du mandrin d'imprégnation 16". Chaque spirale de guidage comporte une première extrémité 141a, 141b formant la cale 102a, 102b et une seconde extrémité 142a, 142b opposée à la première extrémité 141a, 141b et formant la cale supplémentaire 122a, 122b. La cale 102a, 102b et la cale supplémentaire 122a, 122b de chaque spirale forme une portion de rail annulaire de guidage 130a, 130b.

Dans ce mode de réalisation, les modules de déplacement radial 110a, 110b sont configurés pour jouer chacun sur un axe configuré pour modifier le diamètre de l'anneau formé par la spirale, en rapprochant ou en éloignant la première extrémité 141a, 141b de la seconde extrémité 142a, 142b tout en maintenant constante la distance de séparation horizontale, c'est-à-dire dans une direction orthogonale au plan dans lequel s'étend la spirale. Les machines d'enroulement pourvu des mandrins d'imprégnation selon l'invention offrent ainsi un guidage de la bride de la préforme en formation qui permet de maîtriser la position des brides de la texture fibreuse contre les flasques d'un mandrin d'imprégnation juste avant la prise d'un tour supplémentaire.

## Revendications

1. Dispositif de guidage (100, 100', 100") d'une texture fibreuse (18) sur un mandrin d'imprégnation (16, 16', 16") d'une machine d'enroulement (10), comprenant une première cale radiale (102a) destinée à être disposée en regard d'un premier flasque (26a) du mandrin d'imprégnation (16, 16', 16"), une seconde cale radiale (102b) destinée à être disposée en regard d'un second flasque (26b) du mandrin d'imprégnation (16, 16', 16"), et un châssis (104) apte à supporter la première cale (102a) et la seconde cale (102b), le châssis (104) comprenant des moyens (106) d'ajustement de la position de la première cale (102a) et de la seconde cale (102b) aptes à positionner la première cale (102a) et la seconde cale (102b) respectivement à distance du premier flasque (26a) et du second flasque (26b) du mandrin d'imprégnation (16, 16', 16") de manière à maintenir respectivement une première portion (180a) de texture fibreuse (18) s'étendant le long du premier flasque (26a) en appui contre le premier flasque (26a) et une seconde portion (180b) de texture fibreuse (18) s'étendant le long du second flasque (26b) en appui contre le second flasque (26b), sans bloquer la rotation du mandrin d'imprégnation (16, 16', 16") entre deux tours consécutifs de la texture fibreuse.

2. Dispositif de guidage (100, 100', 100") selon la revendication 1, dans lequel les moyens d'ajustement (106) comportent pour chacune des deux cales (102a, 102b) un premier module (108a, 108b) apte à ajuster la position de la cale (102a, 102b) dans une première direction en fonction de l'épaisseur de la texture fibreuse (18) et du nombre de tours que le mandrin (16, 16', 16") a déjà effectué avec la texture fibreuse (18).

3. Dispositif de guidage (100, 100', 100") selon l'une des revendications 1 ou 2, dans lequel les moyens d'ajustement (106) comportent pour chacune des deux cales (102a, 102b) un second module (110a, 110b) apte à ajuster la position de la cale (102a, 102b) dans une seconde direction en fonction de la forme et du diamètre du mandrin d'imprégnation (16, 16', 16"), d'une part, et en fonction de l'épaisseur de la texture fibreuse (18) et du nombre de tours que le mandrin (16, 16', 16") a déjà effectué avec la texture fibreuse (18), d'autre part.

4. Dispositif de guidage (100, 100', 100") selon l'une des revendications 1 à 3, comprenant une unité électronique de commande apte à commander l'actionnement automatique des moyens d'ajustement (106) en fonction de l'enroulement de la texture fibreuse (18) sur le mandrin d'imprégnation (16, 16', 16").

5. Dispositif de guidage (100, 100', 100") selon l'une des revendications 1 à 4, dans lequel au moins l'une des première et seconde cales (102a, 102b) est en matériau plastique.

6. Dispositif de guidage (100', 100") selon l'une des revendications 1 à 5, dans lequel pour chacune des première et seconde cales (102a, 102b), ladite cale (102a, 102b) est associée à une cale supplémentaire (122a, 122b) disposée parallèlement à ladite cale (102a, 012b) de manière à définir entre la cale (102a, 102b) et la cale supplémentaire (122a, 122b) au moins une portion de rail annulaire de guidage (130a, 130b), le rail de guidage (130a, 130b) étant destiné à recevoir une portion (181a, 181b) de texture fibreuse (18) en cours d'enroulement destinée à venir s'étendre le long d'un flasque correspondant (26a, 26b) pendant que la face de ladite cale (102a, 102b) opposée à ladite cale supplémentaire (122a, 122b) maintien au moins une couche de portion (181a, 181b) de texture fibreuse (18) déjà enroulée s'étendant le long dudit flasque (26a, 26b) en appui contre le flasque (26a, 26b).

7. Dispositif de guidage (100") selon la revendication 6, comprenant deux spirales de guidage aptes chacune à faire un tour complet de la paroi annulaire centrale (24) du mandrin d'imprégnation (16") s'étendant entre le premier et le second flasques (26a, 26b), chaque spirale de guidage comportant une première extrémité (141a , 141b) formant ladite cale (102a, 102b) et une seconde extrémité (142a, 142b) opposée à la première extrémité (141a, 141b) formant ladite cale supplémentaire (122a, 122b).

8. Mandrin d'imprégnation (16, 16', 16") d'une machine d'enroulement (10) destiné à recevoir un renfort fibreux formé par des couches superposées d'une texture fibreuse (18) pour la fabrication d'un carter de turbine à gaz en matériau composite, le mandrin d'imprégnation (16, 16', 16") comportant une paroi annulaire centrale (24) dont le profil correspond à celui du carter à fabriquer, et un premier flasque (26a) et un second flasque (26b) latéraux dont les profils correspondent à ceux de brides externes du carter à fabriquer,
**caractérisé en ce qu'**il comprend un dispositif de guidage (100, 100', 100") selon l'une des revendications 1 à 7, la première cale radiale (102a) étant disposée en regard du premier flasque (26a) et la seconde cale radiale (102b) étant disposée en regard du second flasque (26b), la première cale (102a) et la seconde cale (102b) étant distantes respectivement du premier flasque (26a) et du second flasque (26b) pour maintenir respectivement une première portion (181a) et une seconde portion (181b) de texture fibreuse s'étendant respectivement le long du premier flasque (26a) et du second flasque (26b) en appui contre le premier flasque (26a) et le second flasque (26b) sans bloquer la rotation du mandrin (16, 16', 16").

9. Mandrin d'imprégnation (16, 16', 16") selon la revendication 8, comprenant une unité électronique de sécurité apte à déclencher un arrêt du mandrin d'imprégnation (16, 16', 16") dès que l'effort exercé par la première portion (181a) et/ou la seconde portion (181b) de texture fibreuse (18) s'étendant respectivement le long du premier flasque (26a) et du second flasque (26b) respectivement sur la première cale (102a) et la seconde cale (102b) est supérieur à un seuil de force.

10. Machine d'enroulement (10) d'une texture fibreuse (18) sur un mandrin d'imprégnation (16, 16', 16"), comprenant un mandrin d'appel (14) sur lequel est destiné à être stockée une texture fibreuse (18) obtenue par tissage tridimensionnel et un mandrin d'imprégnation (16, 16', 16") selon l'une des revendications 8 ou 9.

## Patentansprüche

1. Führungsvorrichtung (100, 100', 100") einer faserigen Textur (18) auf einem Imprägnierdorn (16, 16', 16") einer Wickelmaschine (10), umfassend einen ersten radialen Keil (102a), der dazu bestimmt ist, gegenüber einem ersten Flansch (26a) des Imprägnierdorns (16, 16', 16") angeordnet zu werden, einen zweiten radialen Keil (102b), der dazu bestimmt ist, gegenüber einem zweiten Flansch (26b) des Imprägnierdorns (16, 16', 16") angeordnet zu werden, und ein Gestell (104), das geeignet ist, um den ersten Keil (102a) und den zweiten Keil (102b) zu tragen, das Gestell (104) umfassend Einrichtungen (106) zum Einstellen der Position des ersten Keils (102a) und des zweiten Keils (102b) umfasst, die geeignet sind, um den ersten Keil (102a) und den zweiten Keil (102b) jeweils in einem Abstand von dem ersten Flansch (26a) und dem zweiten Flansch (26b) des Imprägnierdorns (16, 16', 16") einzustellen, um jeweils einen ersten Abschnitt (180a) der Fasertextur (18), der sich entlang des ersten Flanschs (26a) erstreckt, in Anlage gegen den ersten Flansch (26a), und einen zweiten Abschnitt (180b) der Fasertextur (18), der sich entlang des zweiten Flansches (26b) erstreckt, in Anlage gegen den zweiten Flansch (26b) zu halten, ohne die Drehung des Imprägnierdorns (16, 16', 16") zwischen zwei aufeinanderfolgenden Umdrehungen der Fasertextur zu blockieren.

2. Führungsvorrichtung (100, 100', 100") nach Anspruch 1, wobei die Einstelleinrichtungen (106) für jeden der zwei Keile (102a, 102b) ein erstes Modul (108a, 108b) umfassen, das geeignet ist, die Position des Keils (102a, 102b) in einer ersten Richtung abhängig von der Stärke der Fasertextur (18) und der Anzahl Umdrehungen, die der Dorn (16, 16', 16") mit der Fasertextur (18) bereits ausgeführt hat, einzustellen.

3. Führungsvorrichtung (100, 100', 100") nach einem der Ansprüche 1 oder 2, wobei die Einstelleinrichtungen (106) für jeden der zwei Keile (102a, 102b) ein zweites Modul (110a, 110b) umfassen, das geeignet ist, um die Position des Keils (102a, 102b) in einer zweiten Richtung einerseits abhängig von der Form und dem Durchmesser des Imprägnierdorns (16, 16', 16") und andererseits abhängig von der Stärke der Fasertextur (18) und der Anzahl Umdrehungen, die der Dorn (16, 16', 16") bereits mit der Fasertextur (18) durchgeführt hat, einzustellen.

4. Führungsvorrichtung (100, 100', 100") nach einem der Ansprüche 1 bis 3, umfassend eine elektronische Steuereinheit, die geeignet ist, um die automatische Betätigung der Einstelleinrichtungen (106) abhängig von dem Aufwickeln der Fasertextur (18) auf den Imprägnierdorn (16, 16', 16") zu steuern.

5. Führungsvorrichtung (100, 100', 100") nach einem der Ansprüche 1 bis 4, wobei mindestens einer von dem ersten und dem zweiten Keil (102a, 102b) aus einem Kunststoffmaterial ist.

6. Führungsvorrichtung (100', 100") nach einem der Ansprüche 1 bis 5, wobei für jeden von dem ersten und dem zweiten Keil (102a, 102b) der Keil (102a, 102b) mit einem ergänzenden Keil (122a, 122b) assoziiert ist, der parallel zu dem Keil (102a, 012b) angeordnet ist, um zwischen dem Keil (102a, 102b) und dem ergänzenden Keil (122a, 122b) mindestens einen Abschnitt einer ringförmigen Führungsschiene (130a, 130b) zu definieren, wobei die Führungsschiene (130a, 130b) dazu bestimmt ist, einen Abschnitt (181a, 181b) der gerade aufgewickelten Fasertextur (18) aufzunehmen, der dazu bestimmt ist, sich entlang eines entsprechenden Flanschs (26a, 26b) zu erstrecken, während die Seite des Keils (102a, 102b) gegenüber dem ergänzenden Keil (122a, 122b) mindestens eine Schicht eines Abschnitts (181a, 181b) der bereits gewickelten Fasertextur (18), die sich entlang des Flanschs (26a, 26b) erstreckt, in Anlage an den Flansch (26a, 26b) zu halten.

7. Führungsvorrichtung (100") nach Anspruch 6, umfassend zwei Führungsspiralen, die jeweils geeignet sind, um eine vollständige Umdrehung der mittleren ringförmigen Wand (24) des Imprägnierdorns (16") zu machen, die sich zwischen dem ersten und dem zweiten Flansch (26a, 26b) erstreckt, jede Führungsspirale umfassend ein erstes Ende (141a, 141b), das den Keil (102a, 102b) bildet, und ein zweites Ende (142a, 142b) gegenüber dem ersten Ende (141a, 141b), das den ergänzenden Keil (122a, 122b) bildet.

8. Imprägnierdorn (16, 16', 16") einer Wickelmaschine (10), der dazu bestimmt ist, eine Faserverstärkung, die aus übereinanderliegenden Schichten einer Fasertextur (18) gebildet ist, zur Herstellung eines Gasturbinengehäuses aus Verbundmaterial aufzunehmen, der Imprägnierdorn (16, 16', 16") umfassend eine mittlere ringförmige Wand (24), deren Profil dem des herzustellenden Gehäuses entspricht, und einen ersten Seitenflansch (26a) und einen zweiten Seitenflansch (26b), deren Profile denen von Außenflanschen des herzustellenden Gehäuses entsprechen,
**dadurch gekennzeichnet, dass** er eine Führungsvorrichtung (100, 100', 100") nach einem der Ansprüche 1 bis 7 umfasst, wobei der erste radiale Keil (102a) gegenüber dem ersten Flansch (26a) angeordnet ist und der zweite radiale Keil (102b) gegenüber dem zweiten Flansch (26b) angeordnet ist, wobei der erste Keil (102a) und der zweite Keil (102b) jeweils von dem ersten Flansch (26a) und dem zweiten Flansch (26b) beabstandet sind, um jeweils einen ersten Abschnitt (181a) und einen zweiten Abschnitt (181b) einer faserigen Textur, die sich jeweils entlang des ersten Flanschs (26a) und des zweiten Flanschs (26b) erstrecken, in Anlage an dem ersten Flansch (26a) und dem zweiten Flansch (26b) zu halten, ohne die Drehung des Dorns (16, 16', 16") zu blockieren.

9. Imprägnierdorn (16, 16', 16") nach Anspruch 8, umfassend eine elektronische Sicherheitseinheit, die geeignet ist, um einen Stopp des Imprägnierdorns (16, 16', 16") auszulösen, sobald die Kraft, die von dem ersten Abschnitt (181a) und/oder dem zweiten Abschnitt (181b) der Fasertextur (18), die sich entlang des ersten Flansches (26a) bzw. des zweiten Flanschs (26b) auf den ersten Keil (102a) bzw. den zweiten Keil (102b) erstreckt, ausgeübt wird, über einem Kraftschwellenwert ist.

10. Wickelmaschine (10) einer Fasertextur (18) auf einen Imprägnierdorn (16, 16', 16"), umfassend einen Abholdorn (14), auf dem eine durch dreidimensionales Weben erlangte Fasertextur (18) gespeichert werden soll, und einen Imprägnierdorn (16, 16', 16") nach einem der Ansprüche 8 oder 9.

## Claims

1. A guiding device (100, 100', 100") for guiding a fiber texture (18) on an impregnation mandrel (16, 16', 16") of a winding machine (10), the device comprising a first radial spacer (102a) for placing facing a first cheekplate (26a) of the impregnation mandrel (16, 16', 16"), a second radial spacer (102b) for placing facing a second cheekplate (26b) of the impregnation mandrel (16, 16', 16"), and a cross-member (104) suitable for supporting the first and second spacers (102a, 102b), the cross-member (104) including adjustment means (106) for adjusting the positions of the first and second spacers (102a, 102b) and suitable for positioning the first and second spacers (102a, 102b) apart respectively from the first and second cheekplate (26a, 26b) of the impregnation mandrel (16, 16', 16") so as to hold a first portion (180a) of fiber texture (18) that extends along the first cheekplate (26a) pressed against the first cheekplate (26a), and a second portion (180b) of fiber texture (18) that extends along the second cheekplate (26b) pressed against the second cheekplate (26b), without blocking rotation of the impregnation mandrel (16, 16', 16") between two consecutive turns of the fiber texture.

2. A guiding device (100, 100', 100") according to claim 1, wherein the adjustment means (106) comprise, for each of the two spacers (102a, 102b), a first module (108a, 108b) suitable for adjusting the position of the spacer (102a, 102b) in a first direction as a function of the thickness of the fiber texture (18) and as a function of the number of turns that the mandrel (16, 16', 16") has already made with the fiber texture (18).

3. A guiding device (100, 100', 100") according to claim 1 or claim 2, wherein the adjustment means (106) comprise, for each of the two spacers (102a, 102b), a second module (110a, 110b) suitable for adjusting the position of the spacer (102a, 102b) in a second direction both as a function of the shape and the diameter of the impregnation mandrel (16, 16', 16"), and also as a function of the thickness of the fiber texture (18) and of the number of turns that the mandrel (16, 16', 16") has already made with the fiber texture (18).

4. A guiding device (100, 100', 100") according to any one of claims 1 to 3, including an electronic control unit suitable for controlling automatic actuation of the adjustment means (106) as a function of the winding of the fiber texture (18) on the impregnation mandrel (16, 16', 16").

5. A guiding device (100, 100', 100") according to any one of claims 1 to 4, wherein at least one of the first and second spacers (102a, 102b) is made of plastics material.

6. A guiding device (100', 100") according to any one of claims 1 to 5, wherein, for each of the first and second spacers (102a, 102b), said spacer (102a, 102b) is associated with an additional spacer (122a, 122b) arranged parallel with said spacer (102a, 012b) so as to define at least one annular guiding rail portion (130a, 130b) between the spacer (102a, 102b) and the additional spacer (122a, 122b), the guiding rail (130a, 130b) being for receiving a portion (181a, 181b) of fiber texture (18) being wound that is to extend along a corresponding cheekplate (26a, 26b) while the face of said spacer (102a, 102b) facing away from said additional spacer (122a, 122b) holds at least one layer of the portion (181a, 181b) of fiber texture (18) that has already been wound and that extends along said cheekplate (26a, 26b) so that it presses against the cheekplate (26a, 26b).

7. A guiding device (100") according to claim 6, including two guiding spirals, each suitable for making one complete turn around the central annular wall (24) of the impregnation mandrel (16") that extends between the first and second cheekplates (26a, 26b), each guiding spiral having a first end (141a, 141b) forming said spacer (102a, 102b) and a second end (142a, 142b) opposite from the first end (141a, 141b) forming said additional spacer (122a, 122b).

8. An impregnation mandrel (16, 16', 16") of a winding machine (10) that is to receive fiber reinforcement formed by superposed layers of a fiber texture (18) in order to fabricate a gas turbine casing out of composite material, the impregnation mandrel (16, 16', 16") comprising a central annular wall (24) of profile corresponding to the profile of the casing that is to be fabricated, and first and second cheekplates (26a, 26b) of profiles that correspond to the profiles of outer flanges of the casing that is to be fabricated, the mandrel being **characterized in that** it includes a guiding device (100, 100', 100") according to any one of claims 1 to 7, the first radial spacer (102a) being arranged facing the first cheekplate (26a) and the second radial spacer (102b) being arranged facing the second cheekplate (26b), the first and second spacers (102a, 102b) being spaced apart respectively from the first and second cheekplates (26a, 26b) in order to hold respective first and second portions (181a, 181b) of fiber texture that extend along the first and second cheekplates (26a, 26b) respectively pressed against the first cheekplate (26a) and the second cheekplate (26b) without blocking rotation of the mandrel (16, 16', 16").

9. An impregnation mandrel (16, 16', 16") according to claim 8, including an electronic safety unit suitable for causing the impregnation mandrel (16, 16', 16") to stop as soon as the force exerted on the first spacer (102a) or the second spacer (102b) respectively by the first portion (181a) and/or the second portion (181b) of the fiber texture (18) that extends respectively along the first cheekplate (26a) or along the second cheekplate (26b) becomes greater than a force threshold.

10. A winding machine (10) for winding a fiber texture (18) on an impregnation mandrel (16, 16', 16"), the machine comprising a take-up mandrel (14) for storing a fiber texture (18) obtained by three-dimensional weaving and an impregnation mandrel (16, 16', 16") according to claim 8 or claim 9.
